# EUROPEAN PATENT SPECIFICATION

(11) **EP 3 326 894 B1**
(45) Date of publication and mention of the grant of the patent: **19.06.2019**
(21) Application number: 16382568.0
(22) Date of filing: 29.11.2016
(51) Int. Cl.: B62H 3/08, E04H 6/00

(54) **MODULAR STRUCTURE FOR BICYCLE PARKING**
MODULÄRE STRUKTUR ZUM FAHRRADPARKEN
STRUCTURE MODULAIRE DE STATIONNEMENT DE BICYCLETTE

(43) Date of publication of application: 30.05.2018
(73) Proprietor: Tournride SL, 15702 Santiago de Compostela (ES)
(72) Inventor: RODRIGUEZ PRIETO, Xavier, 15702 SANTIAGO DE COMPOSTELA (ES)
(74) Representative: Carvajal y Urquijo, Isabel

(56) References cited:
- DE-U1- 29 513 590
- FR-A1- 2 761 656
- GB-A- 2 341 196
- GB-A- 2 481 978
- KR-A- 20110 115 894
- US-B1- 8 820 004

## Description

### Field of the invention

The present invention is included within the field of modular structures and management systems for bicycle parking.

### Background of the invention

Currently, the increasing use of bicycles in urban environments makes it more necessary for facilities to be provided in public areas wherein bicycles can be parked safely.

With that purpose, bicycle parking places are provided in public areas which consist of metallic profiles anchored to the ground, wherein the bikes are fixed. However, these types of parking spaces have the inconvenience that bicycles are exposed to weather conditions, vandalism and theft thereof by third parties.

Modular bicycle parking lots are also known, such as for example those disclosed in the patent document ES2386270-A1, which are formed by several compartments being laterally coupled, the set of compartments being closed at both ends by means of side covers. However, this type of modular parking has the drawback of allowing access from one compartment to bikes parked in adjacent compartments. Furthermore, this type of modular compartments is not hermetic and allows rain water or other external elements to enter, which can cause damage to the objects being parked within the compartment. Document GB2481978-A discloses a modular structure for bicycle parking according to the preamble of claim 1, in particular a bicycle storage unit comprising a plurality of individual cycle storage lockers including sensors for detecting the presence or absence of a bicycle.

The present invention solves the above problems by means of a bicycle parking area formed by enclosed and hermetic modules which protect the parked bikes against vandalism, thefts and weather conditions. The present invention also includes an electronic control of each compartment, allowing the remote management and online booking of the different compartments (e.g. by using a smartphone, computer or electronic tablet).

### Description of the invention

The invention refers to a modular bicycle parking facility being closed, having a front opening and an inner channel for guiding and holding the bike. The modular structure for bicycle parking is formed by one or several modules or compartments which side couple linearly,
with the bicycles being parked at the same height.

Compartments of the modular structure are fitted to accommodate a bicycle, are airtight and they are laterally attached to each other and separated by side panels, preferably backlighted. The assembly is enclosed by side closing covers at each side of the modular structure. Each compartment comprises a platform having a longitudinal channel for guiding and holding the bike; an access ramp at the front of the compartment so as to make access of the bike to the platform easier; at least an outer protection cover covering the back part and at least partially the upper part of the compartment; a front door featuring a vertical opening for accessing the compartment; and actuating means being configured so as to activate the opening or closing of the front door. The modular structure comprises control means intended for activating the compartments actuating means depending on the information being received through the communication module.

In an embodiment, the front door of the compartments is implemented as a rolling door, and the actuating means comprise an electric motor. In an alternative embodiment, the front door of the compartments is implemented as a double door system, wherein the actuating means comprise an electronic lock.

The modular structure may comprise side trims frontally covering the attachment area between compartments. The side trims can incorporate at the front thereof a display to show information relative to the current state of the compartment.

The modular structure may comprise a video camera located at each compartment, for visualizing the compartment content, and data processing means configured for analysing at least an image captured by the video camera and detecting the presence or absence of a bike within the compartment. Each compartment may comprise one or several levelling devices being adjustable so as to stabilize the platform.

In an embodiment, the modular structure control means comprise a control unit and individual control modules in each compartment. The communication module of the modular structure is preferably wirelessly operated, which allows remotely managing and monitoring the state of the modular structure by means of a main server, a mobile device application and/or a web application. The modular structure may comprise a data base being synchronized with a main server having information about reservations made for the compartments and users that have made the reservation.

Another aspect of the present invention refers to a management system for bicycle parking lots, comprising at least a modular structure for bicycle parking as it has been previously described, and a main server being configured for remote management and monitoring of the different compartments of the at least one modular structure. The main server is preferably configured for allowing remote management of the compartment from a modular structure through customers web applications, mobile devices applications, third-party services, smart city data suppliers. In an embodiment wherein the modular structure comprises a data base (being synchronized with the main server having information regarding the compartment reservations made and users that have made the reservation), the modular structure can be configured to work autonomously for a determined period of time upon power failures or failures in the communication with the server, allowing the users to access to the places being booked according to the information contained in the data base.

The modular parking solution of the present invention provides the following advantages with respect to the modular bicycle parking places already existing:
- While in the existing modular parking places the bikes have to be introduced in the compartment in a direction opposite to the conventional running direction (the rear wheel first), in the present invention the bicycle can be introduced head-on (front wheel first) or vice versa, depending on the users convenience.
- Each independent compartment carries two side inner locks to avoid access to the adjacent compartments. Therefore, the compartments are isolated from the rest, which guarantees no theft, tampering or damage to the elements accommodated in the adjacent compartments. Furthermore, these side locks are backlighted so as to guarantee the user has a good visibility inside under adverse conditions.
- Compartments are fully hermetic and are lifted with respect to the ground where they are installed, by means of a platform. Compartments include an access ramp in order to place the bicycle up on the platform, wherein the electronic lock system is fitted (not shown in the figure). The access ramp and the platform guarantee that the content stored in each module is lifted with respect to the ground and insulated against water from rain, operators cleaning tasks or puddles caused due to differences in the ground levelling, preventing damage from occurring on the parked bike or on other elements being left next to the bicycles, such as rucksacks, or attached thereto inside the compartment.

- Compartments include a channel for guiding the bicycle made on the compartment floor itself, which makes manufacturing and mounting the compartment easier since it does not require an additional tubing structure or additional elements for guiding the bicycle.
- Each compartment is independent and does not require auxiliary elements for attaching them, since these are anchored to one another directly by means of screws at the bottom rear side, central area and front bottom side.
- Compartments use a front door (either a double door or shutter door) featuring a vertical opening, from bottom to top, in such a way that when the door is open the user can access the inner part of the compartment smoothly, granting easy placement of the bike therein, fitting thereof, and the possibility of introducing additional elements (such as rucksacks, suitcases and bags) with no effort and guaranteeing access to the bottom of each module easily and in a simple way. However, in the existing modular parking places the doors feature a side opening, which makes the simultaneous operation of adjacent compartments difficult, since the opening of each door limits access to the adjacent place, being necessary to close each door in order to access the contiguous compartment. The opening system of the compartments of the present invention allows all the doors to be opened simultaneously (that is, there can be situations wherein several users can introduce bicycles simultaneously, at the same time, in compartments being adjacent or not).
- The present invention uses an electronic lock in each compartment, and a control unit in order to control the opening and closing operations of the different electronic locks. It also includes an opening system featuring manual unblocking for cases when there is a power failure. In an alternative embodiment, the compartments do not use electronic locks; instead, the compartments use a front rolling door or sliding shutter actuated by means of an electric motor which automatically blocks the door opening or closing.
- The modular parking control unit uses wireless communication with a main server for carrying out with the remote management and monitoring of the parking lots, being also possible to manage those by means of a mobile application or a web application. A user data base is also used being synchronized with the main server and a register of the state of the current parking places. Using these elements allows making reservations of parking places online and in advance with respect to the time of use.
- The compartments of the present invention can also include accessories providing functional advantages, such as inner LED lighting, a LED system for use indications (green/red), a video camera in each compartment for visualizing the content in real time or for identifying that the object introduced in the compartment is in fact a bicycle, or an alarm system for real time warnings of any system incidence.

In the present invention there is no limit in the number of compartments that can be coupled. The only limit is the space available for use thereof. The compartments can be easily installed ("plug and play"), being possible to replace them in a quick manner, without affecting the rest of the parking structure. Furthermore, the number of places for each location can be configured or modified when necessary.

The user has the option of proceed with renting the parking place in real time or making a reservation as soon as it considers appropriate. The system includes centralized alarm service and 24-hour customer assistance. The user can see the time they have used the parking place and the rate being charged so far.

In the present modular parking solution the structural reinforcement elements are reduced since reinforced fibre is used in order to guarantee the structure consistency. Furthermore, the compartments of the modular structure are completely hermetic and airtight, thus guaranteeing sealing of the content once closed.

### Brief description of the drawings

The following is a brief description of a series of drawings which will help understand the invention better and which specifically refer to an embodiment of said invention presented as a non-limiting example thereof.
Figure 1 shows a perspective view of an embodiment of the modular structure for bicycle parking, with a double door system.
Figure 2 represents a front view of the modular structure for bicycle parking of Figure 1.
Figures 3 and 4 show, respectively, a profile view and a perspective view of a module or compartment of the modular structure for bicycle parking from Figure 1.
Figure 5 represents a perspective view of another embodiment of the modular structure for bicycle parking, having a shutter door system.
Figure 6, 7, 8 and 9 represent respectively a side view, a front view, a plan view and a cross section vertical view of a compartment of the modular structure for bicycle parking of Figure 5.
Figure 10 shows a diagram of the control electronics of the modular structure.
Figure 11 illustrates a management scheme for several modular structures.

### Detailed description of the invention

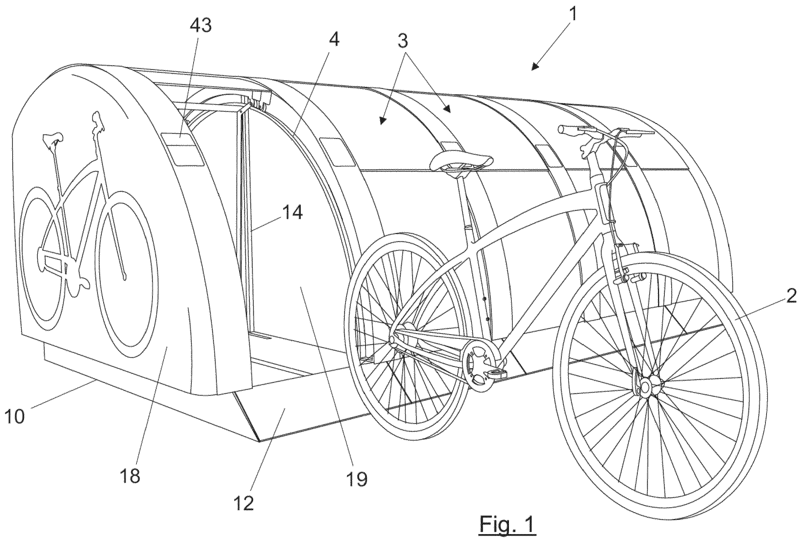

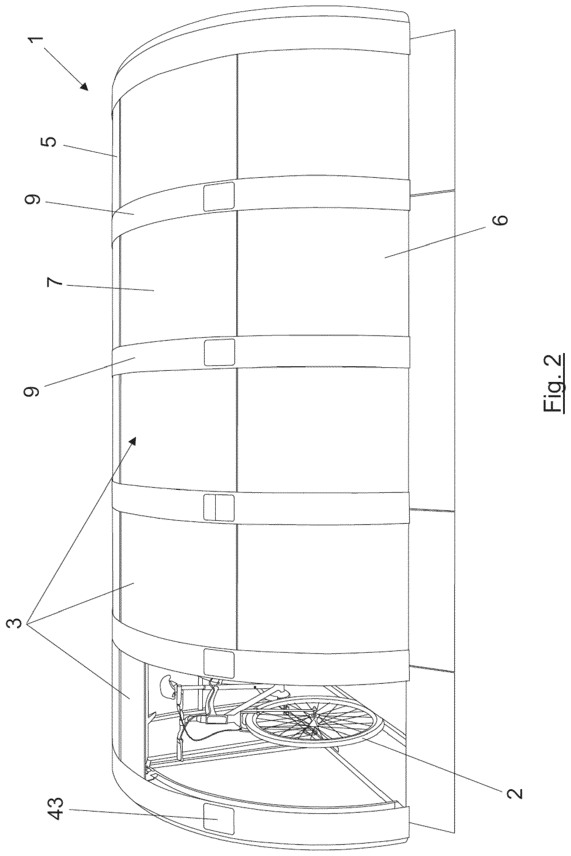

The present invention refers to a modular structure 1 for bicycle parking, so as to accommodate and fix the bicycles 2, comprising one or more compartments 3 being laterally modulable, as it can be seen in Figures 1 and 2 (perspective view and front view of the modular structure 1, respectively), representing an embodiment having a double door opening system and electronic lock.

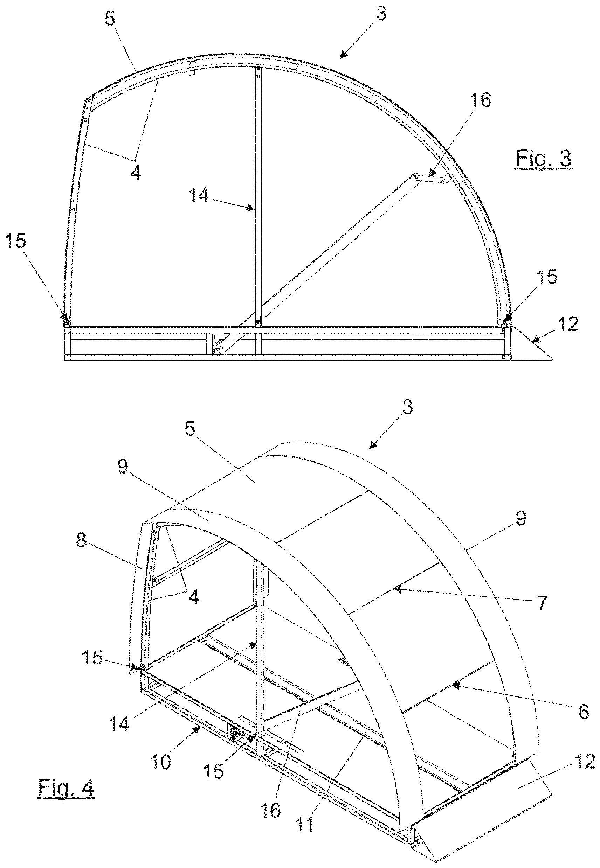

Each module or compartment 3 of the modular structure 1, shown in Figure 3 (profile view) and Figure 4 (perspective view), is defined as two sets of profiles 4 being symmetrical and parallel to each other, between which there is arranged:
- At the upper side, an upper protecting cover 5.
- At the front, an opening system featuring a double vertical sliding door (lower door 6 and upper door 7), by means of a guide or an articulated bar 16.
- At the rear side, a rear closing cover 8.

The rear closing cover 8 and the upper cover 5 can be integrated in a single piece. Over each profile set 4 there is arranged a cover or side trim profile 9. At the lower side, each compartment 3 is provided with a base or platform 10 having a guiding rail or longitudinal channel 11 for holding and guiding the bicycle 2. The object of the longitudinal channel 11 is to guide the bicycle from the entrance until the definitive position thereof and avoid the use of additional elements for fastening thereof.

The structure base or platform 10 is lifted with respect to the ground plane of the piece of land on which it is installed in order to avoid contact and guaranteeing safety thereof against floods. In order to make grant an easier introduction of the bicycle 2 into the compartment 3, the platform 10 incorporates a small access ramp 12 at the front to save the difference in height with respect to the ground plane and thus making the bicycle introduction into the modular structure 1 easier.

An upper support structure 14 is intended to support the sets of profiles 4 in the upper central part thereof. Each module or compartment 3 is formed by a metallic structure which allows attachment thereof to the adjacent compartments 3 through fastening elements 15 (tightening fitting screws or the like) between modules, supporting the outer structure (the different covers) and guiding the lower 6 and upper 7 door during the opening and closing operations.

Furthermore, the modules or compartments 3 for accommodating bicycles (from 1 to n, according to the desired configuration), the modular structure 1 for bicycle parking also comprises two trims or side closing covers 18 at each side of the modular structure 1, preferably made if glass fibre due to the lightness and strength thereof against shock and corrosion. The modular structure assembly 1 is completely enclosed and grants anti vandalism protection and support against weather. The structure and geometry of the different compartments 3 also allow the use thereof as advertising support.

Attachment between compartments 3 is preferably covered by a side trim 9 made of stainless steel so as to confer robustness, safety and beauty to the whole module. The width of each compartment 3 is enough for the user to be able to introduce the bicycle without rotating the handle-bar. The modular structure 1 has an IP65 protection grade for granting sealing of the content against external elements (water, wind, dust).

Once the bicycle 2 is introduced in the compartment 3, the closing system of the compartment 3 is carried out by means of a door featuring two elements (lower door 6 and upper door 7) running through side guides and from top to bottom.

Each compartment 3 is independent and isolated from the adjacent one by means of a wall or lateral panel 19, preferably made of aluminium with polycarbonate panels, such that it is guaranteed that the adjacent module cannot be accessed therefrom. Compartments 3 are also provided with inner lighting for making access of the user easier under poor lighting conditions.

The floor of the compartment for bicycle fixing is preferably made of corrugated aluminium featuring a slight slope which is enough for water discharging the platform. Furthermore, it includes a plastic profile over the longitudinal channel 11 in order to prevent the wheel rims of the bicycle 2 from being scratched.

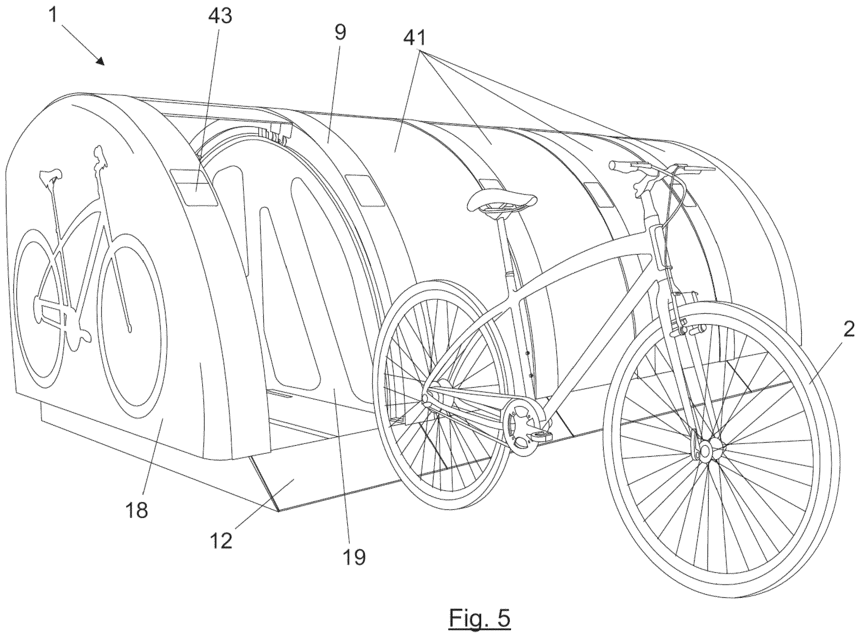

Figure 5 represents a perspective view of another embodiment of the modular structure for bicycle parking, wherein a rolling door or sliding shutter system is used, being actuated by an electric motor which blocks the door opening or closing.

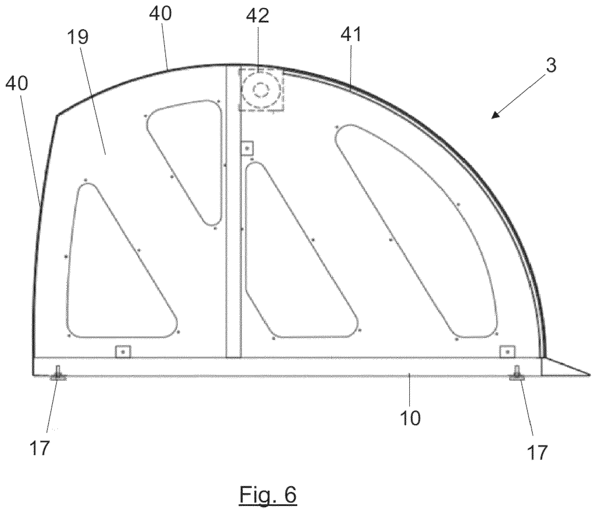

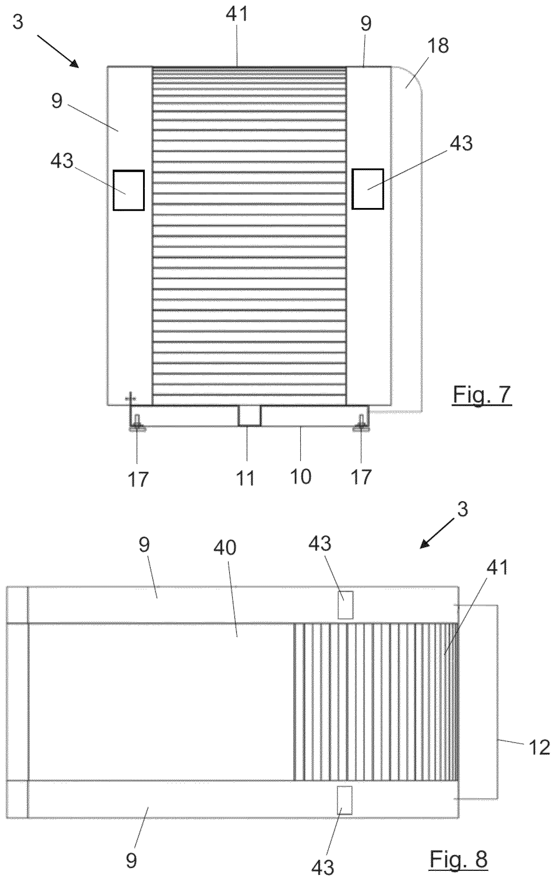

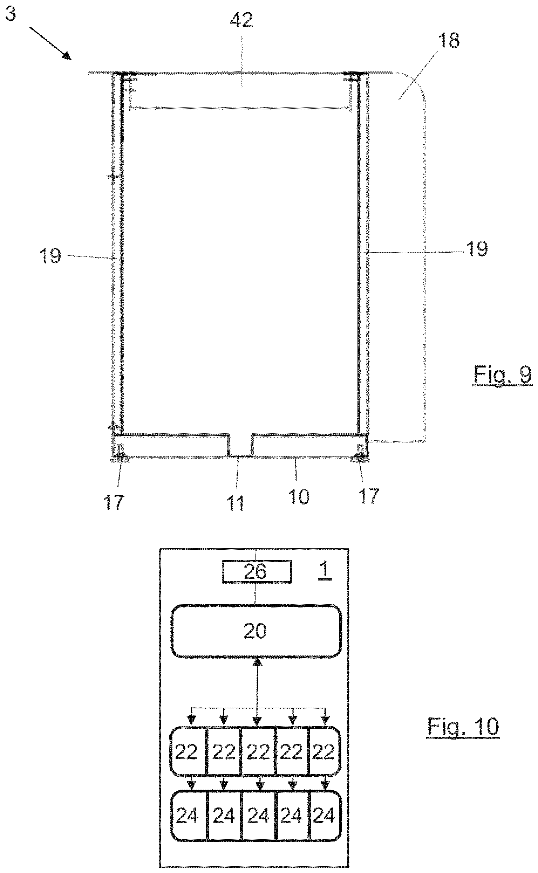

Figures 6 to 9 show different views of the compartments 3 of the modular structure according to the embodiment of Figure 5, using a rolling door and wherein a lateral panel 19 can be seen for separation between compartments 3. Particularly, they show a side view (Figure 6), a front view (Figure 7), a plan view (Figure 8) and a vertical cross section view (Figure 9). The modular structure 1 for accommodating bicycles comprises one or more compartments 3 attached to each other, but being independent and isolated from the adjacent compartments by means of rigid and backlighted lateral panels 19.

In this embodiment each compartment 3 is formed by a structure including:
- an access ramp 12 for accessing the parking lot which makes it easier for the user to introduce the bicycle 2 on the floor or metallic platform 10 being elevated from the ground for insulation in case of flood.
- a longitudinal channel 11 or central guide for guiding the bicycles 2. This guiding element for the bicycle is a structural part of the platform 10, providing the assembly with rigidity and stability, avoiding the use of additional elements for fastening the bike, and thus allowing the user to have easy access into the compartment in the operation for introducing the bicycle therein.
- adjustable levelling devices 17 for stabilizing the platform 10 onto the ground.
- an outer protection structure 40 made of metal, similar to the protecting upper cover 5 and rear closing cover 8 of Figure 4, but made as a single piece.
- a rolling access door 41 actuated by means of an electric motor 42 granting opening thereof and blocking in case of closing.

Furthermore, the modular structure 1 is provided with lateral metallic trims 9 between adjacent compartments 3.These lateral trims 9 hide the attaching systems between places and include, at the front side thereof, a display 43 featuring functions of information panels in real time about the lot state (free or engaged). The attachment between each compartment 3 with the adjacent one is carried out by means of fastening elements (bolts and screws or similar) at the sides of each parking place.

At the sides of the parking assembly, the modular structure 1, trim elements or side closing covers 18 are incorporated (figures 7 and 9), there being two of these closing elements for each parking assembly. These elements are not part of the compartment 3 but of the modular structure 1.

The parking system also includes, for each compartment, inner lighting for making usage thereof easier under adverse lighting conditions. It can also include a surveillance camera featuring image recognition for granting the correct use of the parking place by the user.

Figure 10 represents a diagram of the control electronics of the modular structure 1. A control unit 20 for the modular structure 1 is intended for managing the opening and closing operations of the different compartments 3.

Each compartment 3 is provided with an individual control module 22 intended for activating actuating means 24 configured for opening or closing the compartment 3. The actuating means 24 can be implemented in an electronic lock with interlocking means (for the double door embodiment of Figure 1), or by means of an electric motor actuating the rolling shutter (for the sliding shutter embodiment of Figure 5). The opening system of the modular structure 1 also allows manual unblocking in case it is required so (in the case of using the double door) or actuating the electric motor enabling the shutter opening and closing in the modules using this closing system. The different modules featuring individual control 22 of the compartments 3 are managed by the control unit 20 of the modular structure 1. The modular structure 1 can incorporate a communication module 26, preferably wirelessly operated (for example, a 3G or 4G modem), for communicating the control unit 20 with external entities, such as for example a remote main server. Furthermore, each compartment 3 can incorporate a camera for monitoring the operations, and a charging device for connecting an electric bicycle, both of them managed by the individual control module 22. The charging device only supplies power once the door of the compartment 3 is closed. Optionally, the power supply can be activated on demand (on payment in advance, for example). The possibility of using a motor for opening and closing each compartment 3 is contemplated. The inner side of the compartment is preferably lighted by means of a set of LEDs activated by the corresponding individual control module 22.

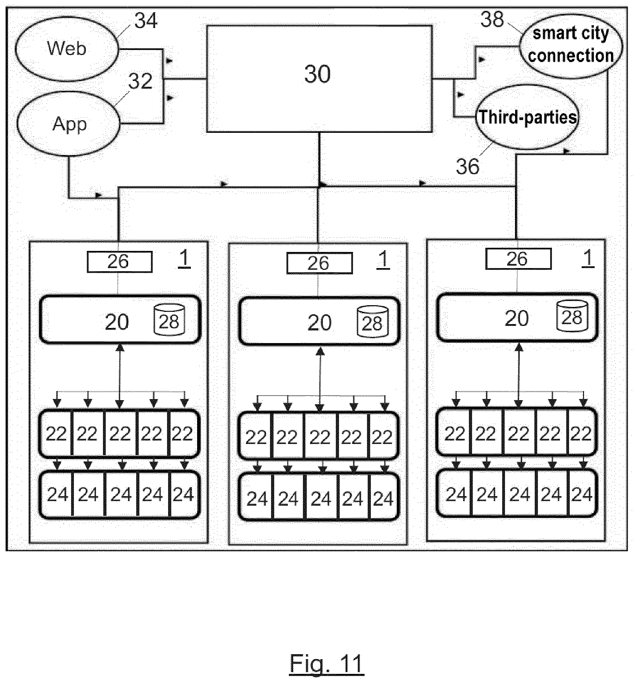

Figure 11 illustrate a global scheme for remote management and monitoring of several modular structures 1 placed in different locations of the same city. For that purpose, the different modular structures 1 communicate with a remote main server 30 using the communication module 26, preferably wirelessly operated.

Opening and closing of each compartment 3 of a modular structure 1 can be managed by means of an application 32 with a mobile device (e.g. electronic tablet, smartphone), by means of a system being tele-managed from the main server 30, which is intended for sending the suitable opening instructions to the corresponding individual control module 22. Alternatively, the mobile application 32 can receive a prior authorization from the main server 30 for directly operating a compartment 3.

The door of the compartments 3 preferably incorporates a system for preventing unintended closing and entrapments. Water coming from the rain or cleaning tasks can be drained through a drainage inlet, thus avoiding the formation of bacteria or pathogenic elements. In case of electric failure, the electronic lock can be opened manually using a master key (in cases when the double door is used), or unblocking the motor (in cases when the shutter door is used). Furthermore, it incorporates a battery system allowing the users having use authorization, to open the doors for a given time (autonomously). When the system lacks of power supply and works using the auxiliary batteries, it allows users already having a bike within to open the doors, but it does not allow the use of free places for new users. At a safety level, each compartment 3 can be provided with a camera having a software for identifying objects for preventing objects from being introduced which are different to those the compartment 3 is intended for, such that if the object identification software does not detect the introduction of a bicycle, the electronic lock of the compartment 3 is not activated or else the electric motor for the shutter opening or closing is not actuated.

In a preferred embodiment, the control unit 20 of the modular structure 1 is provided with a data base 28 being synchronized periodically with the main server 30, including information about users and reservations of the parking places in that lot. In case of failure of the connection with the main server 30, as the control unit 20 is periodically synchronized, management of the modular structure 1 can be autonomous, being the last reservations and the users data base 28 updated, thus avoiding being out of order.

The main server 30 controls a set of modular structures 1 located in the same city, being also in charge of the customer and payment management. The main server 30 can also manage customer web applications 34 (for accessing the service, for example, from a computer), mobile devices applications 32, third-party services 36 and smart city data suppliers 38, thus achieving collecting data from the different lots and transmit them for the applications in smart cities.

Interaction of the user with the system is carried out through an application (using smartphones, tablets, laptops, computers or the like), allowing identification of the user, making a reservation for a parking place, opening and/or closing the parking places being used or communicating incidences to the alarm centre. The application also allows the users to see in real time the content of their parking place remotely, by using a smartphone, tablet, computer or similar. It also allows rating the charge for the parking use and the time spent. The user of a parking place can also grant opening to third parties in case they require so or due to different reasons.

The parking lot is also provided with a security system allowing, among other functions, remote opening of the parking places, blocking or unblocking access to a parking place, warning in case of inappropriate use of the parking place, or warning the user of excessive time consumption in a parking place. The parking lot is also provided with an auxiliary system which will allow the user to keep on interacting with the electronics of the modular structure 1 although a power supply failure or a failure in the communication line with the main server 30 takes place.

## Claims

1. Modular structure for bicycle parking, comprising a plurality of airtight compartments (3) being laterally attached to each other and separated by means of lateral panels (19), said plurality of attached compartments being closed by side closing covers (18) at each side of the modular structure (1); wherein each compartment (3) is fitted to accommodate a bicycle (2) and comprises:
- at least an outer protecting cover (40; 5, 8) which covers the rear side and at least partially the upper side of the compartment (3);
- a front door (6, 7; 41) opening vertically for accessing the compartment (3);
- actuating means (24) configured for activating the opening or closing operations of the front door (6, 7; 41);
wherein the modular structure (1) comprises control means (20, 22) intended for activating the actuating means (24) of the compartments (3) depending on the information received through a communication module (26);
**characterized in that** each compartment (3) further comprises:
- a platform (10) lifted with respect to the ground plane and with a slight slope for water discharging, the platform (10) having:
a longitudinal channel (11) made on the floor of the platform (10) for guiding and holding the bicycle (2); and
an access ramp (12) at the front side of the compartment (3) to save the difference in height with respect to the ground plane for making access of the bicycle (2) to the platform (10) easier.

2. Modular structure according to claim 1, wherein the front door of the compartments (3) is a rolling door (41), and the actuating means (24) comprise an electric motor (42).

3. Modular structure according to claim 1, wherein the front door of the compartments (3) is a system featuring a double door (6, 7) and the actuating means (24) comprise an electronic lock.

4. Modular structure according to any of the previous claims, further comprising side trims (9) frontally covering the attachment between compartments (3).

5. Modular structure according to claim 4, wherein the side trims (9) incorporate at the front side thereof a display (43) configured for showing information relative to the current state of the compartment (3).

6. Modular structure according to any of the previous claims, wherein the lateral panels (19) are backlighted.

7. Modular structure according to any of the previous claims, further comprising:
a video camera located in each compartment and being configured for visualizing the content of the compartment (3), and
data processing means configured for analysing at least an image captured by the video camera and detecting the presence or absence of a bicycle (2) within the compartment (3).

8. Modular structure according to any of the previous claims, wherein each compartment (3) comprises at least an adjustable levelling device (17) for stabilizing the platform (10).

9. Modular structure according to any of the previous claims, wherein the control means (20, 22) of the modular structure (1) comprise a control unit (20) and individual control units (22) at each compartment.

10. Modular structure according to any of the previous claims, wherein the communication module (26) is wirelessly operated, allowing remote management and monitoring of the state of the modular structure (1) through at least one of the following:
a main server (30),
a mobile device application (32),
a web application (34).

11. Modular structure according to claim 10, further comprising a data base (28) being synchronized with a main server (30) having information about reservations made for the compartments (3) and about the users that have made the reservation.

12. Modular structure according to any of the previous claims, wherein the floor of the platform (10) is made of corrugated aluminium and includes a plastic profile over the longitudinal channel (11) to prevent the wheel rims of the bicycle (2) from being scratched.

13. Bicycle parking management system, comprising at least a modular structure (1) for parking bicycles according to any of the previous claims, and a main server (30) configured for remote management and monitoring of the different compartments (3) of the at least one modular structure (1).

14. System according to claim 13, wherein the main server (30) is configured for allowing remote management of the compartments (3) of the at least one modular structure (1) through at least one of the following:
customers web applications (34),
mobile devices applications (32),
third-parties services (36),
smart city data suppliers (38).

15. System according to claim 13 or 14, wherein the at least one modular structure (1) comprises a data base (28) synchronized with the main server (30) and having information about reservations made for the compartments (3) and about the users that have made the reservations, the at least one modular structure (1) being configured for working autonomously for a given time against power failures or communication failures with the server (30), granting the users with access to the places being booked according to the information contained in the data base (28).

## Patentansprüche

1. Modulare Struktur zum Fahrradparken, umfassend eine Vielzahl von luftdichten Fächern (3), die seitlich aneinander angebracht und durch Seitenwände (19) getrennt sind, wobei die genannte Vielzahl von aneinander angebrachten Fächern durch seitliche Abdeckungen (18) auf jeder Seite der modularen Struktur (1) geschlossen ist; wobei jedes Fach (3) zur Aufnahme eines Fahrrads (2) ausgelegt ist und umfasst:
- mindestens eine äußere Schutzabdeckung (40; 5, 8), die die Rückseite und zumindest teilweise die Oberseite des Fachs (3) abdeckt;
- eine Vordertür (6, 7; 41), die zwecks Zugangs zu dem Fach (3) vertikal geöffnet wird;
- Betätigungsmittel (24), die zum Auslösen der Öffnungs- und Schließvorgänge der Vordertür (6, 7; 41) ausgestaltet sind;
wobei die modulare Struktur (1) Steuermittel (20, 22) umfasst, die zum Aktivieren der Betätigungsmittel (24) der Fächer (3) je nach den durch ein Kommunikationsmodul (26) empfangenen Informationen vorgesehen sind;
**dadurch gekennzeichnet, dass** jedes Fach (3) ferner umfasst:
- eine Plattform (10), die gegenüber der Bodenebene angehoben ist und eine leichte Neigung zwecks Wasserableitung aufweist, wobei die Plattform (10) aufweist:
- einen Längskanal (11), der zum Führen und Halten des Fahrrads (2) auf dem Boden der Plattform (10) ausgebildet ist; und
- eine Zugangsrampe (12) an der Vorderseite des Fachs (3) zur Überwindung des Höhenunterschieds zur Bodenebene, um den Zugang des Fahrrads (2) zur Plattform (10) zu erleichtern.

2. Modulare Struktur nach Anspruch 1, wobei die Vordertür der Fächer (3) eine Rolltür (41) ist und die Betätigungsmittel (24) einen Elektromotor (42) umfassen.

3. Modulare Struktur nach Anspruch 1, wobei die Vordertür der Fächer (3) ein System mit einer Doppeltür (6, 7) ist und die Betätigungsmittel (24) ein elektronisches Schloss umfassen.

4. Modulare Struktur nach einem der vorstehenden Ansprüche, ferner umfassend Seitenverkleidungen (9), die die Verbindung zwischen den Fächern (3) frontal abdecken.

5. Modulare Struktur nach Anspruch 4, wobei die Seitenverkleidungen (9) an ihrer Vorderseite eine Anzeige (43) aufweisen, die zum Anzeigen von Informationen in Bezug auf den aktuellen Zustand des Fachs (3) ausgelegt ist.

6. Modulare Struktur nach einem der vorstehenden Ansprüche, wobei die Seitenwände (19) hinterleuchtet sind.

7. Modulare Struktur nach einem der vorstehenden Ansprüche, ferner umfassend:
eine in jedem Fach befindliche Videokamera, die zum Visualisieren des Inhalts des Fachs (3) ausgelegt ist, und
Datenverarbeitungsmittel, die so ausgelegt sind, dass sie mindestens ein von der Videokamera aufgenommenes Bild auswerten und das Vorhandensein oder Fehlen eines Fahrrads (2) in dem Fach (3) erfassen.

8. Modulare Struktur nach einem der vorstehenden Ansprüche, wobei jedes Fach (3) mindestens eine einstellbare Nivelliereinrichtung (17) zum Stabilisieren der Plattform (10) umfasst.

9. Modulare Struktur nach einem der vorstehenden Ansprüche, wobei die Steuermittel (20, 22) der modularen Struktur (1) eine Steuerung (20) und Einzelsteuerungen (22) in jedem Fach umfassen.

10. Modulare Struktur nach einem der vorstehenden Ansprüche, wobei das Kommunikationsmodul (26) drahtlos betrieben wird, was eine Fernverwaltung und Überwachung des Zustands der modularen Struktur (1) durch mindestens eine der folgenden Einrichtungen ermöglicht:
einen Hauptserver (30),
eine Anwendung (32) für mobile Geräte,
eine Webanwendung (34).

11. Modulare Struktur nach Anspruch 10, ferner umfassend eine mit einem Hauptserver (30) synchronisierte Datenbank, die Informationen über Reservierungen für die Fächer (3) und über die Benutzer, die die Reservierungen getätigt haben, enthält.

12. Modulare Struktur nach einem der vorstehenden Ansprüche, wobei der Boden der Plattform (10) aus geriffeltem Aluminium besteht und ein Kunststoffprofil über dem Längskanal (11) aufweist, um zu verhindern, dass die Radfelgen des Fahrrads (2) verkratzt werden.

13. Fahrrad-Parkraummanagementsystem, umfassend mindestens eine modulare Struktur (1) zum Fahrradparken gemäß einem der vorstehenden Ansprüche und einen Hauptserver (30), der zur Fernverwaltung und - überwachung der verschiedenen Fächer (3) der mindestens einen modularen Struktur (1) ausgelegt ist.

14. System nach Anspruch 13, wobei der Hauptserver (30) dazu ausgelegt ist, die Fernverwaltung der Fächer (3) der mindestens einen modularen Struktur (1) durch mindestens eine der folgenden Einrichtungen zu ermöglichen:
Webanwendungen der Kunden (34),
Anwendungen für mobile Geräte (32),
Drittanbieter-Dienste (36),
Smart-City-Datenanbieter (38).

15. System nach Anspruch 13 oder 14, wobei die mindestens eine modulare Struktur (1) eine mit dem Hauptserver (30) synchronisierte Datenbank (28) umfasst, die Informationen über Reservierungen für die Fächer (3) und über die Benutzer, die die Reservierungen getätigt haben, enthält, wobei die mindestens eine modulare Struktur (1) dazu ausgelegt ist, bei Stromausfällen oder Ausfall der Kommunikation mit dem Server (30), für eine bestimmte Zeit autonom zu arbeiten und den Benutzern gemäß den in der Datenbank (28) enthaltenen Informationen Zugang zu den gebuchten Plätzen zu gewähren.

## Revendications

1. Structure modulaire de stationnement de bicyclettes, comprenant une pluralité de compartiments étanches à l'air (3) fixés latéralement les uns aux autres et séparés au moyen de panneaux latéraux (19), ladite pluralité de compartiments fixés étant fermés par des couvercles de fermeture latéraux (18) de chaque côté de la structure modulaire (1) ; dans laquelle chaque compartiment (3) est adapté pour recevoir une bicyclette (2) et comprend :
- au moins un couvercle extérieure de protection (40 ; 5, 8) qui recouvre le côté arrière et au moins partiellement le côté supérieur du compartiment (3) ;
- une porte avant (6, 7 ; 41) s'ouvrant verticalement pour accéder au compartiment (3) ;
- des moyens d'actionnement (24) configurés pour activer les opérations d'ouverture ou de fermeture de la porte avant (6, 7 ; 41) ;
dans laquelle la structure modulaire (1) comprend des moyens de commande (20, 22) destinés à activer les moyens d'actionnement (24) des compartiments (3) en fonction des informations reçues par un module de communication (26) ; **caractérisé en ce que** chaque compartiment (3) comprend en outre :
- une plate-forme (10) soulevée par rapport au plan du sol et avec une légère pente pour l'évacuation de l'eau, la plate-forme (10) présentant :
un canal longitudinal (11) réalisé sur le plancher de la plate-forme (10) pour guider et maintenir la bicyclette (2) ; et
une rampe d'accès (12) dans le côté avant du compartiment (3) pour franchir la différence de hauteur par rapport au plan du sol pour faciliter l'accès de la bicyclette (2) à la plate-forme (10).

2. Structure modulaire selon la revendication 1, dans laquelle la porte avant des compartiments (3) est une porte roulante (41), et les moyens d'actionnement (24) comprennent un moteur électrique (42).

3. Structure modulaire selon la revendication 1, dans laquelle la porte avant des compartiments (3) est un système comportant une porte double (6, 7) et les moyens d'actionnement (24) comprennent une serrure électronique.

4. Structure modulaire selon l'une quelconque des revendications précédentes, comprenant en outre des garnitures latérales (9) couvrant de manière frontale la fixation entre les compartiments (3).

5. Structure modulaire selon la revendication 4, dans laquelle les garnitures latérales (9) comportent sur leur côté avant un affichage (43) configuré pour afficher des informations relatives à l'état actuel du compartiment (3).

6. Structure modulaire selon l'une quelconque des revendications précédentes, dans laquelle les panneaux latéraux (19) sont rétroéclairés.

7. Structure modulaire selon l'une quelconque des revendications précédentes, comprenant en outre :
une caméra vidéo située dans chaque compartiment et configurée pour visualiser le contenu du compartiment (3), et
des moyens de traitement de données configurés pour analyser au moins une image capturée par la caméra vidéo et détecter la présence ou l'absence d'une bicyclette (2) dans le compartiment (3).

8. Structure modulaire selon l'une quelconque des revendications précédentes, dans laquelle chaque compartiment (3) comprend au moins un dispositif de nivellement réglable (17) pour stabiliser la plate-forme (10).

9. Structure modulaire selon l'une quelconque des revendications précédentes, dans laquelle les moyens de commande (20, 22) de la structure modulaire (1) comprennent une unité de commande (20) et des unités de commande individuelles (22) dans chaque compartiment.

10. Structure modulaire selon l'une quelconque des revendications précédentes, dans laquelle le module de communication (26) est commandé sans fil, permettant la gestion et la surveillance à distance de l'état de la structure modulaire (1) à travers au moins un des éléments suivants :
un serveur principal (30),
une application d'appareil mobile (32),
une application web (34).

11. Structure modulaire selon la revendication 10, comprenant en outre une base de données (28) synchronisée avec un serveur principal (30) ayant des informations sur les réservations effectuées pour les compartiments (3) et sur les utilisateurs qui ont effectué la réservation.

12. Structure modulaire selon l'une quelconque des revendications précédentes, dans laquelle le plancher de la plate-forme (10) est en aluminium ondulé et comporte un profilé en matière plastique sur le canal longitudinal (11) pour éviter que les jantes de la bicyclette (2) ne se rayent.

13. Système de gestion de stationnement de bicyclettes, comprenant au moins une structure modulaire (1) de stationnement de bicyclettes selon l'une quelconque des revendications précédentes, et un serveur principal (30) configuré pour la gestion et la surveillance à distance des différents compartiments (3) de l'au moins une structure modulaire (1).

14. Système selon la revendication 13, dans lequel le serveur principal (30) est configuré pour permettre la gestion à distance des compartiments (3) de l'au moins une structure modulaire (1) à travers au moins un des éléments suivants :
applications web des clients (34),
applications d'appareils mobiles (32),
services fournis par des tiers (36),
fournisseurs de données de villes intelligentes (38).

15. Système selon la revendication 13 ou 14, dans lequel l'au moins une structure modulaire (1) comprend une base de données (28) synchronisée avec le serveur principal (30) et comportant des informations sur les réservations effectuées pour les compartiments (3) et sur les utilisateurs qui ont effectué les réservations, l'au moins une structure modulaire (1) étant configurée pour fonctionner de manière autonome pendant un temps donné contre les pannes de courant ou les problèmes de communication avec le serveur (30), donnant aux utilisateurs accès aux endroits réservés selon les informations contenues dans la base de données (28).
